# EUROPÄISCHE PATENTSCHRIFT

(11) **EP 3 068 237 B1**
(45) Veröffentlichungstag und Bekanntmachung des Hinweises auf die Patenterteilung: **08.08.2018**
(21) Anmeldenummer: 14793586.0
(22) Anmeldetag: 06.11.2014
(51) Int. Cl.: A23L 3/04, A23L 2/46

(54) **VERFAHREN SOWIE ANLAGE ZUM PASTEURISIEREN VON PRODUKTEN IN BEHÄLTERN**
METHOD AND SYSTEM FOR PASTEURIZATION OF PRODUCTS IN CONTAINERS
PROCÉDÉ ET INSTALLATION DE PASTEURISATION DE PRODUITS DANS DES RÉCIPIENTS

(30) Priorität: 12.11.2013 DE 102013112398
(43) Veröffentlichungstag der Anmeldung: 21.09.2016
(73) Patentinhaber: KHS GmbH, 44143 Dortmund (DE)
(72) Erfinder: RATKE, Andre, 45731 Waltrop (DE); DITTRICH, Falk, 44581 Castrop-Rauxel (DE)
(86) Internationale Anmeldenummer: PCT/EP2014/073925
(87) Internationale Veröffentlichungsnummer: WO 2015/071168

(56) Entgegenhaltungen:
- EP-A1- 2 657 180
- JP-A- 2011 255 952
- US-A- 4 490 401

## Beschreibung

Die Erfindung bezieht sich auf ein Verfahren gemäß Oberbegriff Patentanspruch 1 sowie auf eine Anlage gemäß Oberbegriff Patentanspruch 9.

Verfahren und Anlagen zum Pasteurisieren bzw. Sterilisieren von in Behälter abgefüllten Produkten durch Erhitzen der Behälter und des Produktes auf eine Sterilisier- oder Pasteurisiertemperatur, beispielsweise auf eine Temperatur im Bereich zwischen 60 und 85°C, sind bekannt. Das Erhitzen auf die Sterilisier- oder Pasteurisiertemperatur und eine anschließendes Abkühlen erfolgen durch Behandlung, d.h. durch Besprühen und/oder Überschwallen mit einem flüssigen Behandlungsmedium (Wasser oder Wasser mit Zusätzen, z.B. Glykol) in mehreren Behandlungszonen, durch die die Behälter bewegt werden und die Aufheizzonen, Zonen eines Sterilisier- oder Pasteurisationsbereichs sowie Rückkühlzonen bilden. Bekannt ist hierbei, durch eine entsprechende Führung des bei der Behandlung anfallenden Behandlungsmediums unterschiedlicher Temperatur, aber auch mittels einer Wärmepumpe die Wärmeenergie des Behandlungsmediums niedriger Temperatur zum Erwärmen des Behandlungsmediums auf eine höhere Temperatur zu nutzen.

Bei einer bekannten Anlage der letztgenannten Art (DE 10 2007 003 976 A1) besteht aber nur die Möglichkeit, die mit der Wärmepumpe rückgeführte Wärmeenergie direkt für die Erwärmung des Behandlungsmediums einer Behandlungszone zu nutzen, beispielsweise für das Behandlungsmedium der ersten, sich an die Vorwärmzonen anschließenden Behandlungszone des Pasteurisier- oder Sterilisierbereichs. Durch die Wärmerückgewinnung über die Wärmepumpe sind zwar eine Reduzierung des für den Betrieb der Anlage erforderlichen Energiebedarfs und damit eine Reduzierung der Heizkosten möglich. Eine vollzufriedenstellende Lösung ist hiermit allerdings nicht erreicht. Ein Nachteil des bekannten Verfahrens besteht auch darin, dass ein Teil der Wärmeenergie zwangsläufig nicht genutzt wird, da z.B. in Teillastenbereichen die zur Verfügung stehende Wärmeenergie nicht gespeichert werden kann, ohne die Temperatur des in die Behälter abgefüllten Produktes direkt zu beeinflussen und möglicherweise eine die Qualität des Produktes beeinträchtigende Überpasteurisierung in Kauf zu nehmen.

Ebenfalls bekannt wurde eine Vorrichtung gemäß der JP 2011 255952 A, diese Schrift offenbart einen Pasteur, bei welchem zwei Wärmetauscher und eine Wärmepumpe verwendet werden. Mehr im Detail ist dabei vorgesehen, dass die beiden Wärmetauscher und auch die Wärmepumpe dazu verwendet werden, den Wärmeaustausch zwischen der Aufheizzone und der Abkühlzone der Behälter zu verbessern.
Eine weitere Vorrichtung wurde durch die EP 2 657 180 A1 vorgestellt.
Auch die in dieser Schrift vorgestellte Vorrichtung verwendet zwei Wärmetauscher und eine Wärmepumpe. Mehr im Detail schlägt diese Schrift vor, die Aufnahme von Gasen in Flüssigkeiten dadurch zu verbessern, dass die Flüssigkeiten, beispielsweise Getränke, vor der Beimischung von Gasen abgekühlt werden. Nach der Aufnahme der gewünschten Menge von Gasen werden die Flüssigkeiten wieder erwärmt. Zur Optimierung des Gesamtprozesses wird eine Wärmepumpe eingesetzt, wobei die von der Wärmepumpe erzeugten größeren Temperaturunterschiede insbesondere die Wärmeübergänge innerhalb der Wärmetauscher intensivieren und somit beschleunigen.

Aufgabe der Erfindung ist es, ein Verfahren aufzuzeigen welches eine optimale und sehr flexible Nutzung der Wärmeenergie von auf niedrigem Temperaturniveau anfallendem Behandlungsmedium ermöglicht. Zur Lösung dieser Aufgabe ist ein Verfahren entsprechend dem Patentanspruch 1 ausgebildet. Eine Anlage ist Gegenstand des Patentanspruchs 9.

Bei dem erfindungsgemäßen Verfahren wird die Wärmeenergie des flüssigen Behandlungsmediums (z.B. Wasser oder Wasser mit Zusätzen, beispielsweise mit einem Desinfektionsmittel), welches bei der Behandlung auf niedrigem Temperaturniveau anfällt, z.B. auf einem Temperaturniveau im Bereich zwischen 20°C und 60°C genutzt, um das Behandlungsmedium in einem Puffertank auf eine Temperatur zu erhitzen und auf einer Temperatur zu halten, die wenigstens gleich der Pasteurisier- oder Sterilisiertemperatur, vorzugsweise größer ist als die Pasteurisier- oder Sterilisiertemperatur, beispielsweise auf eine Temperatur im Bereich zwischen 70°C und 95°C. Aus dem Puffertank wird dann das heiße Behandlungsmedium gesteuert und/oder geregelt direkt an diejenigen Behandlungszonen geleitet, in denen dieses Behandlungsmedium im Prozess gerade benötigt wird. Dies sind insbesondere sämtliche Zonen des Sterilisier- oder Pasteurisationsbereichs, aber auch weitere Behandlungszonen, beispielsweise die Rückkühlzonen.

Der besondere Vorteil der Erfindung besteht in der hohen Flexibilität der Verwendung der über die wenigstens eine Wärmepumpe rückgeführten Wärmeenergie, wodurch sich eine weitere Reduzierung der Heizkosten erreichen lässt. Ein weiterer Vorteil der Erfindung besteht auch darin, dass durch die Pufferung der Wärmeenergie im Puffertank mit der hohen Temperatur eine verbesserte Auslastung der Wärmepumpe in Teillastbereichen der Anlage sichergestellt ist. Eine für die Erfindung geeignete Wärmepumpe ist beispielsweise als Hochleistungswärmepumpe in der EP 2 473 795 A1 beschrieben.

Grundsätzliche Vorteile der Erfindung bestehen weiterhin darin, dass es durch die Rückführung der Wärmeenergie nicht erforderlich ist, warmes Behandlungsmedium als Abwasser aus der Anlage abzuführen und dadurch Wärmeverluste in Kauf zu nehmen. Die Anlage kann ferner gegenüber Anlagen ohne Wärmepumpe in ihren Abmessungen verkleinert werden, da durch den Wärmeentzug mit der Wärmepumpe eine kontinuierliche Rückkühlung der auslaufenden Behälter in den Rückkühlzonen erfolgt und somit eine niedrige Auslauftemperatur der Behälter bei gleicher Maschinengröße erreicht wird. Auch Wärmeverluste durch Behälter, die die Anlage mit hoher Temperatur verlassen, werden vermieden.

Durch den Einsatz der Wärmepumpe entfällt eine zusätzliche Kühlung des Behandlungsmediums, insbesondere für die letzte Rückkühlzone und ein damit verbundener Energieverbrauch.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

In Weiterbildung der Erfindung sind das Verfahren und die Anlage beispielsweise so ausgeführt,
dass der Puffertank das Behandlungsmedium auch zumindest für einen Teil der Rückkühlzonen bereitstellt,
und/oder
dass das Behandlungsmedium des Puffertanks auf eine Temperatur erhitzt wird, die über der Pasteurisier- oder Sterilisiertemperatur liegt, beispielsweise auf eine Temperatur im Bereich zwischen 70 und 95°C,
und/oder
dass über den wenigstens einen Wärmepumpe die Wärmeenergie des in einer Aufheizzone, vorzugsweise des in der Aufheizzone mit dem niedrigsten Temperaturniveau anfallenden Behandlungsmediums genutzt wird,
und/oder
dass zum Erhitzen des Behandlungsmediums des Puffertanks die Wärmeenergie des in einem Sammeltank gesammelten Behandlungsmediums aus Aufheiz- und/oder Rückkühlzonen genutzt wird,
und/oder
dass das in wenigstens einer Zone des Sterilisations- oder Pasteurisationsbereichs anfallende Behandlungsmedium an den Puffertank geleitet wird,
und/oder
dass für das Erhitzen des Behandlungsmediums des Puffertanks eine Heizeinrichtung zusätzlich zu der wenigstens einen Wärmepumpe verwendet wird, und/oder
dass zum Erhitzen des Behandlungsmediums im Puffertank ein diesen Puffertank einschließender Heizkreislauf verwendet ist, in welchem eine Umwälzpumpe ein den Ausgang der Wärmepumpe bildender Wärmetauscher sowie eine Heizeinrichtung vorgesehen sind,
wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

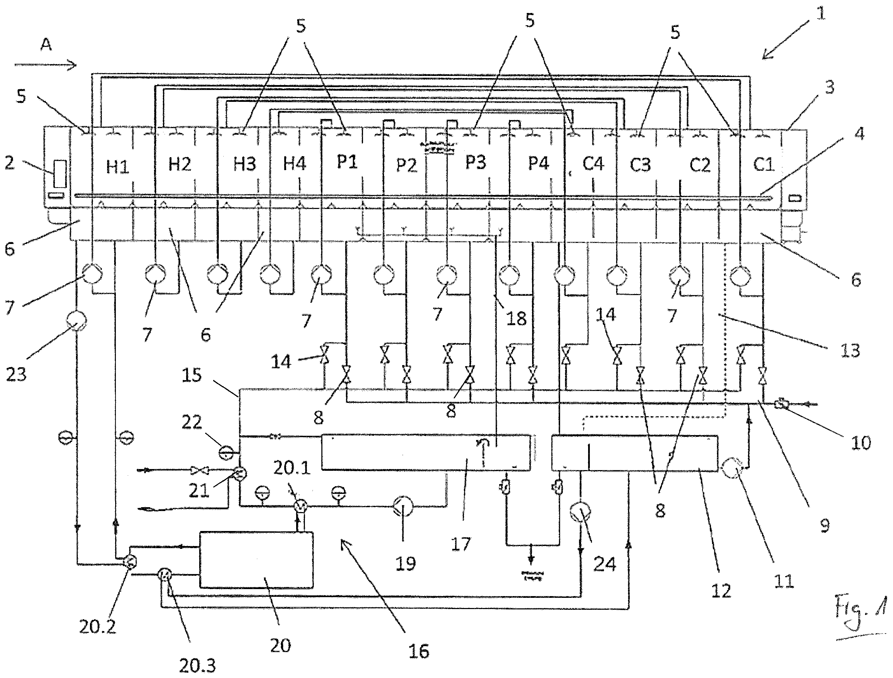

Die Erfindung wird im Folgenden anhand der Figur, die in einer Funktionsdarstellung eine Anlage 1 (Pasteur) zur Hitzebehandlung bzw. zum Sterilisieren oder Pasteurisieren von mit einem Füllgut gefüllten Behältern 2 zeigt, näher erläutert.

Die Anlage 1 besteht in bekannter Weise aus einer Vielzahl von in einem Gehäuse 3 gebildeten Behandlungszonen, die in einer Transportrichtung A aufeinander folgen, in der die Behälter 3 durch die Anlage 1 bzw. deren Behandlungszonen bewegt werden. Die Behandlungszonen sind in der Figur mit H1 - H4, P1 - P4 und mit C4 - C1 bezeichnet. Von den Behandlungszonen dienen die Behandlungszonen H1 - H4, die entsprechend der Wertigkeit ihrer Index-Ziffern in Transportrichtung A aufeinander folgen und denen ebenfalls in der Wertigkeit ihrer Index-Ziffern jeweils eine von Behandlungszone zu Behandlungszone ansteigende Behandlungstemperatur zugeordnet ist, zum schonenden Vorerhitzen der Behälter 2 auf eine endgültige Vorerhitzungstemperatur, die noch deutlich unterhalb einer Sterilisations- oder Pasteurisiertemperatur liegt, d.h. beispielsweise auf eine Vorerhitzungstemperatur im Bereich zwischen 33°C und 60°C. Die Behandlungszonen P1 - P4, die ebenfalls entsprechend der Wertigkeit ihrer Index-Ziffern in Transportrichtung A aufeinanderfolgen, dienen zum weiteren Erhitzen der Behälter 2 auf die erforderliche Sterilisations- bzw. Pasteurisiertemperatur, die beispielsweise im Bereich zwischen 60°C und 85°C liegt, sowie zum Halten der Erhitzen Behälter auf dieser Sterilisations- bzw. Pasteurisiertemperatur über eine vorgegebene Zeitdauer, um so den jeweiligen Behälter bzw. dessen Füllgut mit den für das Sterilisieren bzw. Pasteurisieren erforderlichen Pasteurisationseinheiten (Integral aus Temperatur und Zeit) zu beaufschlagen. Die Behandlungszonen C4 - C1, die in umgekehrter Reihenfolge ihrer Index-Ziffern in Transportrichtung A aufeinander folgen und denen bezogen auf diese Transportrichtung eine von Behandlungszone zu Behandlungszone abnehmende Behandlungstemperatur zugeordnet ist, dienen zum schonenden Ab- oder Rückkühlen der Behälter 2 auf eine Endtemperatur, die beispielsweise etwas größer ist als die Umgebungstemperatur, sowie zur Vermeidung einer Überpasteurisierung des Füllgutes in den Behälter. Zum Bewegen der Behälter 2 durch die Behandlungszonen dient ein in der Figur allgemein mit 4 bezeichneter Transporteur.

Die Behandlung der Behälter 2 in den Behandlungszonen erfolgt durch Besprühen oder Überschwallen mit dem flüssigen Behandlungsmedium in Form von Wasser, eventuell mit Zusätzen, beispielsweise einem Desinfektionsmittel, wobei das Behandlungsmedium in jeder Behandlungszone die der Behandlungstemperatur dieser Zone entsprechende Temperatur aufweist. Jede Behandlungszone weist hierfür eine Vielzahl von Sprühdüsen 5 auf, die beispielsweise oberhalb, eventuell auch seitlich von der Bewegungsbahn angeordnet sind, auf der die Behälter 2 durch die Behandlungszonen bewegt werden. Weiterhin weist jede Behandlungszone unterhalb des Transporteurs 4 einen Sammelraum 6 für das anfallende Behandlungsmedium auf.

Jeder Behandlungszone ist weiterhin eine Pumpe 7 zugeordnet, die eingangsseitig mit dem zugehörigen Sammelraum 6 in Verbindung steht. Ausgangsseitig sind die Pumpen 7 der Behandlungszonen H1 - H4 über Rohrleitungen mit den Sprühdüsen 5 der Behandlungszonen C1 - C4 verbunden, und zwar jeweils mit derjenigen Behandlungszone C1 - C4, die die selbe Index-Ziffer aufweist, wie die entsprechende Behandlungszone H1 - H4. Dies bedeutet, die Pumpe 7 der Behandlungszone 1 ist mit den Düsen 5 der Behandlungszone C1, die Pumpe 7 der Behandlungszone H2 ist mit den Düsen 5 der Behandlungszone C2 verbunden usw. Umgekehrt sind auch die Pumpen 7 der Behandlungszonen C1 - C4 ausgangsseitig über Leitungen mit den Düsen 5 der Behandlungszonen H1 - H4 verbunden, sodass für eine optimalen Nutzung der Wärmeenergie ein kreuzweiser Austausch sowie eine kreuzweise Verwendung der anfallenden Behandlungsflüssigkeit in den Behandlungszonen H1 - H4 und C4 - C1 erfolgt.

Die den Behandlungszonen P1 - P4 zugeordneten Pumpen 7 sind ausgangsseitig jeweils mit den Düsen 5 der betreffenden Behandlungszone P1 - P4 verbunden. Eingangsseitig sind die Pumpen 7 der Behandlungszonen P1 - P4 sowie der Behandlungszonen C3 - C1 über Steuerventile 8 einer ersten Ventilgruppe an eine kaltes Behandlungsmedium bzw. kaltes Wasser führende Leitung 9 angeschlossen, der über ein Ventil 10 auch frisches Wasser zugeführt werden kann und die mit dem Ausgang einer Pumpe 11 verbunden ist, über die die Leitung 9 mit kaltem Behandlungsmedium, d.h. mit Behandlungsmedium aus einem Sammeltank 12 für kaltes Behandlungsmedium versorgt wird, der das Behandlungsmedium mit einer Temperatur im Bereich zwischen 20°C und 45°C führt. Das in dem Sammelraum 6 der Behandlungszone C4 anfallende Behandlungsmedium sowie eventuell auch das in dem Sammelraum der Behandlungszone C1 anfallende Behandlungsmedium wird über jeweils einen Ablauf 13 in den Sammeltank 12 für kaltes Behandlungsmedium geleitet.

Die Pumpen 7 der Behandlungszonen P1 - P4 und C4 - C1 sind eingangsseitig weiterhin über Steuerventile 14 einer zweiten Ventilgruppe mit einer heißes Behandlungsmedium führenden Leitung 15 verbunden. Die Leitung 15 ist an den Ausgang einer Baugruppe 16 angeschlossen, die das heiße Behandlungsmedium bereitstellt und deren zentrales Element ein Pufferspeicher 17 für das heiße Behandlungsmedium ist, beispielsweise für das Behandlungsmedium mit einer Temperatur deutlich über der Sterilisier- oder Pasteurisiertemperatur, z.B. mit einer Temperatur im Bereich zwischen 70°C und 95°C. Dem Pufferspeicher 17, der das Behandlungsmedium mit der angegebenen Temperatur an die Leitung 15 liefert, wird über eine Ableitung 18 das in den Behandlungszonen P1 - P4 anfallende Behandlungsmedium zugeführt.

Der Puffertank 17 ist Bestandteil eines Heizkreises, der u.a. eine Umwälzpumpe 19, einen den Ausgang einer Wärmepumpe 20 bildenden Wärmetauscher 20.1 (Heatsource), einen Erhitzer in Form eines primärseitig von einem heißen, wärmetransportierenden Medium durchströmten Wärmetauschers 21 sowie verschiedene Sensoren 22, beispielsweise auch Temperatursensoren enthält und in dem das Behandlungsmedium zum Erhitzen u.a. mit der Umwälzpumpe 19 aus dem Puffertank 17 entnommen und nach dem Passieren der Wärmtauscher 20.1 und 21 wieder in den Puffertank 17 zurückgeführt wird.

Eingangsseitig weist die als Hochleistungswärmepumpe ausgeführte Wärmepumpe 20 einen Wärmetauscher 20.2 auf, der sekundärseitig von dem Medium der Wärmepumpe 20 und primärseitig von dem im Sammelraum 6 der Behandlungszone H1 anfallenden Behandlungsmedium durchströmt wird, welches mit einer Umwälzpumpe 23 dem Sammelraum 6 entnommen und nach dem Durchströmen des Wärmetauschers 20.2 an den Sammelraum 6 der Behandlungszone H.1 bzw. an den Eingang der zugehörigen Pumpe 7 zurückgeführt wird.

Eingangsseitig weist die Wärmepumpe 20, die Teil eines Heizkreises zum Erhitzen des Behandlungsmediums ist, einen weiteren Wärmetauscher 20.3 (Heatsource) auf, der sekundärseitig von dem Medium der Wärmepumpe 20 und primärseitig von dem Behandlungsmedium aus dem Sammeltank 12 durchströmt wird, welches mittels einer Umwälzpumpe 24 diesem Tank entnommen und nach dem Passieren des Wärmetauschers 20.3 an den Sammeltank 12 zurückgeführt wird.

Eine Besonderheit der erfindungsgemäßen Anlage besteht also darin, dass über die Wärmepumpe 20 Wärmeenergie aus einer Vorbehandlungszone, - bei der beschriebenen Ausführungsform aus der Behandlungszone H1 - und aus einem Sammeltank 12 für kaltes Behandlungsmedium - und damit Wärmeenergie aus einer oder aus mehreren Abkühlzonen, d.h. bei der beschriebenen Ausführungsform aus den Behandlungszonen C4 und C1 - zum Erhitzen des Behandlungsmediums generell genutzt wird. Eine weitere Besonderheit der erfindungsgemäßen Anlage liegt darin, dass die wie zuvor beschrieben gewonnene Wärmeenergie verwendet wird, um das in dem Puffertank 17 enthaltenen Behandlungsmedium auf eine so hohe Temperatur zu erhitzen, dass das erhitzte Behandlungsmedium dann zumindest einer, bevorzugst aber sämtlichen Behandlungszonen P1 - P4 sowie ggs. auch auf diese in Transportrichtung A folgende Behandlungszonen zugeführt werden kann. Bevorzugst erfolgt die Zufuhr des heißen Behandlungsmediums gesteuert und/oder geregelt über die Steuerventile 14.

Das unter Wärmerückgewinnung erhitzte Behandlungsmedium im Puffertank 17 kann aus diesem also direkt zu den Bereichen der Anlage 1 geleitet werden, wo es aktuell im Prozess benötigt wird, sodass ein optimales und sehr flexibles Verteilen auch der rückgewonnen Wärmeenergie auf die Behandlungszonen und dadurch eine wesentliche Einsparung an Heizkosten möglich ist. Insbesondere wird es erfindungsgemäß ermöglicht, mittels Wärmepumpe so weit zu erwärmen, dass es in den Behandlungszonen P1 bis P4, also den Pasteurisationszonen eingesetzt werden kann.

### Bezugszeichenliste

- 1: Anlage oder Pasteur zur Hitzebehandlung von Behältern
- 2: Behälter
- 3: Gehäuse
- 4: Transporteur
- 5: Düsenanordnung
- 6: Sammelraum
- 7: Pumpe
- 8: Steuerventil
- 9: Leitung für kaltes Behandlungsmedium
- 10: Ventil
- 11: Pumpe
- 12: Sammeltank für kaltes Behandlungsmedium
- 13: Ableitung
- 14: Steuerventil
- 15: Leitung für heißes Behandlungsmedium
- 16: Baugruppe zum Bereitstellen des heißen Behandlungsmediums
- 17: Puffertank für heißes Behandlungsmedium
- 18: Ableitung
- 19: Umwälzpumpe
- 20: Wärmepumpe
- 20.1: ausgangsseitiger Wärmetauscher der Wärmepumpe 20
- 20.2, 20.3: eingangsseitiger Wärmetauscher der Wärmepumpe 20
- 21: Erhitzer oder Wärmetauscher
- 22: Sensor
- 23, 24: Umwälzpumpe
- H1 - H4: Behandlungszone bzw. Aufheizzone
- P1 - P4: Behandlungszone bzw. Sterilisationszone
- C1 - C4: Behandlungszone bzw. Rückkühlzone

## Patentansprüche

1. Verfahren zum Sterilisieren oder Pasteurisieren von in Behälter (2) abgefüllten Produkten durch Erhitzen unter Verwendung einer Anlage (1), die in einer Transportrichtung (A) der Behälter (2) aufeinander folgend mehrere Behandlungszonen (H1 - H4; P1 - P4; C4 - C1) aufweist, die Aufheizzonen, Zonen eines Pasteurisationsbereichs sowie Rückkühlzonen bilden und in denen der jeweilige Behälter (2) mit einem flüssigen Behandlungsmedium beaufschlagt wird, dessen Temperatur in den Vorheizzonen bezogen auf die Transportrichtung (A) von Zone zu Zone ansteigt, in den Zonen des Pasteurisationsbereichs eine Sterilisier- oder Pasteurisiertemperatur erreicht und in den Rückkühlzonen bezogen auf die Transportrichtung (A) von Zone zu Zone abnimmt, wobei die Wärmeenergie des bei der Behandlung auf einem niedrigen Temperaturniveau anfallenden Behandlungsmediums mittels wenigstens einer Wärmepumpe (20) zum Erwärmen des Behandlungsmediums auf ein höheres Temperaturniveau genutzt wird, **dadurch gekennzeichnet,**
**dass** die Wärmeenergie des Behandlungsmediums auf dem niedrigen Temperaturniveau zum Erhitzen des Behandlungsmediums mittels eines Heizkreises, der wenigstens die Wärmepumpe (20) umfasst, in einem Puffertank (17) genutzt wird, der das Behandlungsmedium mit einer zumindest der Pasteurisier- oder Sterilisiertemperatur entsprechenden Temperatur führt und der Puffertank (17) dieses Behandlungsmedium zumindest für eine Zone des Pasteurisationsbereichs unmittelbar bereitstellt.

2. Verfahren nach Anspruch 1, **dadurch gekennzeichnet, dass** der Puffertank (17) zumindest teilweise das Behandlungsmedium über Steuerventile (14) auch zumindest für einen Teil der Rückkühlzonen unmittelbar bereitstellt.

3. Verfahren nach Anspruch 1 oder 2, **dadurch gekennzeichnet, dass** das Behandlungsmedium des Puffertanks (17) auf eine Temperatur erhitzt wird, die über der Pasteurisier- oder Sterilisiertemperatur liegt, beispielsweise auf eine Temperatur im Bereich zwischen 70 und 95°C.

4. Verfahren nach einem der vorhergehenden Ansprüche, **dadurch gekennzeichnet, dass** über die wenigstens eine Wärmepumpe (20) die Wärmeenergie des in einer Aufheizzone, vorzugsweise des in der Aufheizzone (H1) mit dem niedrigsten Temperaturniveau anfallenden Behandlungsmediums genutzt wird.

5. Verfahren nach einem der vorhergehenden Ansprüche, **dadurch gekennzeichnet, dass** zum Erhitzen des Behandlungsmediums des Puffertanks (17) die Wärmeenergie des in einem Sammeltank (12) gesammelten Behandlungsmediums aus Aufheiz- und/oder Rückkühlzonen genutzt wird.

6. Verfahren nach Anspruch 5, **dadurch gekennzeichnet, dass** in dem einen Sammeltank (12) enthaltene, durch das Entziehen von Wärmeenergie abgekühlte Behandlungsmedium erneut zumindest einer Behandlungszone zugeführt wird, vorzugsweise in mindestens einer der Rückkühlzonen.

7. Verfahren nach einem der vorhergehenden Ansprüche, **dadurch gekennzeichnet, dass** für das Erhitzen des Behandlungsmediums des Puffertanks (17) eine Heizeinrichtung (21) zusätzlich zu der wenigstens einen Wärmepumpe (20) verwendet wird.

8. Verfahren nach Anspruch 7, **dadurch gekennzeichnet, dass** zum Erhitzen des Behandlungsmediums im Puffertank (17) ein diesen Puffertank einschließender Heizkreislauf verwendet ist, in welchem eine Umwälzpumpe (19) ein den Ausgang der Wärmepumpe (20) bildender Wärmetauscher (20.1) sowie eine Heizeinrichtung (21) vorgesehen sind.

9. Anlage zum Sterilisieren oder Pasteurisieren von in Behälter (2) abgefüllten Produkten durch Erhitzen, mit in einer Transportrichtung (A) der Behälter (2) aufeinander folgenden Behandlungszonen (H1 - H4; P1 - P4; C4 - C1), die Aufheizzonen, Zonen eines Pasteurisationsbereichs sowie Rückkühlzonen bilden und in denen der jeweilige Behälter (2) mit einem flüssigen Behandlungsmedium beaufschlagt wird, dessen Temperatur in den Vorheizzonen bezogen auf die Transportrichtung (A) von Zone zu Zone ansteigt, in den Zonen des Pasteurisationsbereichs eine Sterilisier- oder Pasteurisiertemperatur erreicht und in den Rückkühlzonen bezogen auf die Transportrichtung (A) von Zone zu Zone abnimmt, sowie mit wenigstens einer Wärmepumpe (20) zur Nutzung der Wärmeenergie des bei der Behandlung auf einem niedrigen Temperaturniveau anfallenden Behandlungsmediums zum Erwärmen des Behandlungsmediums auf ein höheres Temperaturniveau,
**dadurch gekennzeichnet,**
**dass** die wenigstens eine Wärmepumpe (20) Teil eines Heizkreises zum Erhitzen des Behandlungsmediums in einem Puffertank (17) ist, der das Behandlungsmedium mit einer zumindest der Pasteurisier- oder Sterilisiertemperatur entsprechenden Temperatur führt und dieses Behandlungsmedium über Steuerventile (14) zumindest für sämtliche Zonen des Pasteurisationsbereichs unmittelbar bereitstellt.

10. Anlage nach Anspruch 9, **dadurch gekennzeichnet, dass** der Puffertank (17) zumindest teilweise das Behandlungsmedium über Steuerventile (14) auch zumindest für einen Teil der Rückkühlzonen bereitstellt.

11. Anlage nach Anspruch 9 oder 10, **dadurch gekennzeichnet, dass** der Puffertank (17) das Behandlungsmedium mit einer Temperatur führt, die über der Pasteurisier- oder Sterilisiertemperatur liegt, beispielsweise mit einer Temperatur im Bereich zwischen 70 und 95°C.

12. Anlage nach einem der vorhergehenden Ansprüche, **dadurch gekennzeichnet, dass** die wenigstens eine Wärmepumpe (20) eingangsseitig mit einem das Behandlungsmedium einer Aufheizzone, vorzugsweise einer Aufheizzone (H1) mit dem niedrigsten Temperaturniveau sammelnden Sammelraum (6) in Verbindung steht.

13. Anlage nach einem der vorhergehenden Ansprüche, **dadurch gekennzeichnet, dass** die wenigstens eine Wärmepumpe (20) eingangsseitig mit einem Sammeltank (12) zum Sammeln des Behandlungsmediums aus Aufheiz- und/oder Rückkühlzonen in Verbindung steht.

14. Anlage nach einem der vorhergehenden Ansprüche, **gekennzeichnet durch** eine Verbindung (18), über die das in wenigstens einer Zone des Sterilisations- oder Pasteurisationsbereichs anfallende Behandlungsmedium an den Puffertank (17) geleitet wird.

15. Anlage nach einem der vorhergehenden Ansprüche, **dadurch gekennzeichnet, dass** für das Erhitzen des Behandlungsmediums des Puffertanks (17) eine Heizeinrichtung (21) zusätzlich zu der wenigstens einen Wärmepumpe (20) vorgesehen ist.

16. Anlage nach Anspruch 15, **dadurch gekennzeichnet, dass** zum Erhitzen des Behandlungsmediums im Puffertank (17) ein diesen Puffertank einschließender Heizkreislauf vorgesehen ist, in welchem eine Umwälzpumpe (19) ein den Ausgang der Wärmepumpe (20) bildender Wärmetauscher (20.1) sowie eine Heizeinrichtung (21) angeordnet sind.

## Claims

1. Method for the sterilisation or pasteurisation of products filled into containers (2) by heating, while using a system (1) which comprises multiple consecutive treatment zones (H1-H4; P1-P4; C4-C1) in a transport direction (A) of the containers (2), which form heating zones, zones of a pasteurisation region, and cooling zones, and in which zones the respective container (2) is filled with a liquid treatment medium, the temperature of which increases from zone to zone in the pre-heating zones with respect to the transport direction (A), reaches a sterilisation or pasteurisation temperature in the zones of the pasteurisation area, and decreases from zone to zone in the cooling zones with respect to the transport direction (A), wherein the thermal energy of the treatment medium accumulating during the treatment at a low temperature level is used by means of at least one heat pump (20) to heat the treatment medium to a higher treatment level,
**characterised in that**
the thermal energy of the treatment medium at the low temperature level is used to heat the treatment medium by means of a heating circuit, which comprises at least one heat pump (20), in a buffer tank (17), which conveys the treatment medium at a temperature which corresponds at least to the pasteurisation temperature or sterilisation temperature, and the buffer tank (17) provides this treatment medium directly at least for one zone of the pasteurisation region.

2. Method according to claim 1, **characterised in that** the buffer tank (17) at least partially directly provides the treatment medium by means of control valves (14) and also at least for a part of the cooling zones.

3. Method according to claim 1 or 2, **characterised in that** the treatment medium of the buffer tank (17) is heated to a temperature which is above the pasteurisation temperature or sterilisation temperature, for example to a temperature in the range between 70 and 95 °C.

4. Method according to any one of the preceding claims, **characterised in that**, by means of the at least one heat pump (20), the thermal energy is exploited of the treatment medium present in a heating zone, preferably in the heating zone (H1) with the lowest temperature level.

5. Method according to any one of the preceding claims, **characterised in that**, for the heating of the treatment medium of the buffer tank (17), the thermal energy is used of the treatment medium collected in a collection tank (12) from heating zones and/or cooling zones.

6. Method according to claim 5, **characterised in that** treatment medium contained in a collection tank (12), cooled by the drawing off of thermal energy, is again conveyed to at least one treatment zone, preferably in at least one of the cooling zones.

7. Method according to any one of the preceding claims, **characterised in that**, for the heating of the treatment medium of the buffer tank (17), a heating device (21) is used in addition to the at least one heat pump (20).

8. Method according to claim 7, **characterised in that**, for the heating of the treatment medium in the buffer tank (17), a heating circuit is used which includes this buffer tank, provided in which are a circulating pump (19), a heat exchanger (20.1) forming the output of the heat pump (20), and a heating device (21).

9. System for the sterilisation or pasteurisation of products filled into containers (2) by heating, with consecutive treatment zones (H1-H4; P1-P4; C4-C1) in a transport direction (A) of the containers (2), which form heating zones, zones of a pasteurisation region, and cooling zones, and in which zones the respective container (2) is filled with a liquid treatment medium, the temperature of which increases from zone to zone in the pre-heating zones with respect to the transport direction (A), reaches a sterilisation or pasteurisation temperature in the zones of the pasteurisation area, and decreases from zone to zone in the cooling zones with respect to the transport direction (A), wherein the thermal energy of the treatment medium accumulating during the treatment at a low temperature level is used by means of at least one heat pump (20) to heat the treatment medium to a higher treatment level,
**characterised in that**
the at least one heat pump (20) is a part of a heating circuit for the heating of the treatment medium in a buffer tank (17), which conveys the treatment medium at a temperature corresponding at least to the pasteurisation or sterilisation temperature, and provides this treatment medium directly by means of control valves (14) at least for all the zones of the pasteurisation area.

10. System according to claim 9, **characterised in that** the buffer tank (17) provides the treatment medium at least partially by way of control valves (14) also at least for a part of the cooling zones.

11. System according to claim 9 or 10, **characterised in that** the buffer tank (17) conveys the treatment medium at a temperature which is above the pasteurisation or sterilisation temperature, for example at a temperature in the range between 70 and 95°C.

12. System according to any one of the preceding claims, **characterised in that** the at least one heat pump (20) is in connection on the input side with a collection area (6), which collects the treatment medium of a heating zone, preferably of a heating zone (H1) with the lowest temperature level.

13. System according to any one of the preceding claims, **characterised in that** the at least one heat pump (20) is in connection on the input side with a collection tank (12) for the collecting of the treatment medium from heating zones and/or cooling zones.

14. System according to any one of the preceding claims, **characterised by** a connection (18), by means of which the treatment medium, incurred in at least one zone of the sterilisation or pasteurisation region, is conveyed to the buffer tank (17).

15. System according to any one of the preceding claims, **characterised in that**, for the heating of the treatment medium of the buffer tank (17), a heating device (21) is provided in addition to the at least one heating pump (20).

16. System according to claim 15, **characterised in that**, for the heating of the treatment medium in the buffer tank (17), a heating circuit integrated with this buffer tank is provided, arranged in which are a circulating pump (19), a heat exchanger (20.1) forming the output of the heat pump (20), and a heating device (21).

## Revendications

1. Procédé servant à stériliser ou à pasteuriser des produits transvasés dans des contenants (2) par réchauffage en utilisant une installation (1), qui présente, dans une direction de transport (A) des contenants (2), successivement, plusieurs zones de traitement (H1 - H4 ; P1 - P4 ; C4 - C1), qui forment des zones de chauffage, des zones d'un secteur de pasteurisation ainsi que des zones de rétro-refroidissement et dans lesquelles le contenant (2) respectif est soumis à l'action d'un milieu de traitement liquide, dont la température augmente dans les zones de préchauffage de zone en zone par rapport à la direction de transport (A), atteint, dans les zones du secteur de pasteurisation, une température de stérilisation ou de pasteurisation et diminue dans les zones de rétro-refroidissement de zone en zone par rapport à la direction de transport (A), dans lequel l'énergie thermique du milieu de traitement résultant lors du traitement à un niveau de température bas est utilisée au moyen d'au moins une pompe à chaleur (20) pour chauffer le milieu de traitement à un niveau de température plus élevé,
**caractérisé en ce**
**que** l'énergie thermique du milieu de traitement est utilisée sur le niveau de température bas pour réchauffer le milieu de traitement au moyen d'un circuit de chauffage, qui comprend au moins la pompe à chaleur (20), dans un réservoir tampon (17), qui guide le milieu de traitement à une température correspondant au moins à la température de pasteurisation ou de stérilisation, et le réservoir tampon (17) fournit directement au moins à une zone du secteur de pasteurisation ledit milieu de traitement.

2. Procédé selon la revendication 1, **caractérisé en ce que** le réservoir formant tampon (17) fournit également au moins à une partie des zones de rétro-refroidissement au moins en partie le milieu de traitement par l'intermédiaire de soupapes de commande (14).

3. Procédé selon la revendication 1 ou 2, **caractérisé en ce que** le milieu de traitement du réservoir tampon (17) est réchauffé à une température, qui est supérieure à la température de pasteurisation ou de stérilisation, par exemple à une température située dans la plage comprise entre 70 et 95 °C.

4. Procédé selon l'une quelconque des revendications précédentes, **caractérisé en ce que** l'énergie thermique du milieu de traitement résultant dans une zone de chauffage, de préférence du milieu de traitement résultant dans une zone de chauffage (H1) avec le niveau de température le plus bas est utilisée par l'intermédiaire de l'au moins une pompe à chaleur (20).

5. Procédé selon l'une quelconque des revendications précédentes, **caractérisé en ce que** l'énergie thermique du milieu de traitement collectée dans un réservoir collecteur (12) issu de zones de chauffage et/ou de rétro-refroidissement est utilisée pour réchauffer le milieu de traitement du réservoir tampon (17).

6. Procédé selon la revendication 5, **caractérisé en ce que** le milieu de traitement contenu dans l'au moins un réservoir collecteur (12), refroidi par le prélèvement d'énergie thermique est amené à nouveau au moins à une zone de traitement, de préférence dans au moins une des zones de rétro-refroidissement.

7. Procédé selon l'une quelconque des revendications précédentes, **caractérisé en ce qu'**un dispositif de chauffage (21) est utilisé en plus de l'au moins une pompe à chaleur (20) pour le réchauffage du milieu de traitement du réservoir tampon (17).

8. Procédé selon la revendication 7, **caractérisé en ce qu'**est utilisé pour réchauffer le milieu de traitement dans le réservoir tampon (17) un circuit de chauffage renfermant ledit réservoir tampon, dans lequel sont prévus une pompe de recirculation (19), un échangeur de chaleur (20.1) formant la sortie de la pompe à chaleur (20) ainsi qu'un dispositif de chauffage (21).

9. Installation servant à stériliser ou à pasteuriser des produits transvasés dans un contenant (2) par réchauffage, avec des zones de traitement (H1 - H4 ; P1 - P4 ; C4 - C1) successives dans une direction de transport (A) des contenants (2), qui forment des zones de chauffage, des zones d'un secteur de pasteurisation ainsi que des zones de rétro-refroidissement, et dans lesquelles le contenant (2) respectif est soumis à l'action d'un milieu de traitement liquide, dont la température augmente dans les zones de préchauffage de zone en zone par rapport à la direction de transport (A), atteint dans les zones du secteur de pasteurisation une température de stérilisation ou de pasteurisation et diminue dans les zones de rétro-refroidissement de zone en zone par rapport à la direction de transport (A), ainsi qu'avec au moins une pompe à chaleur (20) servant à utiliser l'énergie thermique du milieu de traitement résultant lors du traitement à un niveau de température bas pour chauffer le milieu de traitement sur un niveau de température plus élevé,
**caractérisée en ce**
**que** l'au moins une pompe à chaleur (20) fait partie d'un circuit de chauffage servant à réchauffer le milieu de traitement dans un réservoir tampon (17), qui guide le milieu de traitement à une température correspondant au moins à la température de pasteurisation ou de stérilisation et fournit directement au moins à toutes les zones du secteur de pasteurisation ledit milieu de traitement par l'intermédiaire de soupapes de commande (14).

10. Installation selon la revendication 9, **caractérisée en ce que** le réservoir tampon (17) fournit également au moins à une partie des zones de rétro-refroidissement au moins en partie le milieu de traitement par l'intermédiaire de soupapes de commande (14).

11. Installation selon la revendication 9 ou 10, **caractérisée en ce que** le réservoir tampon (17) guide le milieu de traitement à une température, qui est supérieure à la température de pasteurisation ou de stérilisation, par exemple à une température dans la plage comprise entre 70 et 95 °C.

12. Installation selon l'une quelconque des revendications précédentes, **caractérisée en ce que** l'au moins une pompe à chaleur (20) est en communication côté entrée avec un espace collecteur (6) collectant le milieu de traitement d'une zone de chauffage, de préférence d'une zone de chauffage (H1) avec le niveau de température le plus bas.

13. Installation selon l'une quelconque des revendications précédentes, **caractérisée en ce que** l'au moins une pompe à chaleur (20) est en communication côté entrée avec un réservoir collecteur (12) servant à collecter le milieu de traitement issu de zones de chauffage et/ou de rétro-refroidissement.

14. Installation selon l'une quelconque des revendications précédentes, **caractérisée par** une communication (18), par l'intermédiaire de laquelle le milieu de traitement résultant dans au moins une zone du secteur de stérilisation ou de pasteurisation est acheminé au réservoir tampon (17).

15. Installation selon l'une quelconque des revendications précédentes, **caractérisée en ce qu'**un dispositif de chauffage (21) est prévu en plus de l'au moins une pompe à chaleur (20) pour le réchauffage du milieu de traitement du réservoir tampon (17).

16. Installation selon la revendication 15, **caractérisée en ce qu'**est prévu, pour réchauffer le milieu de traitement dans le réservoir tampon (17), un circuit de chauffage renfermant ledit réservoir tampon, dans lequel sont disposés une pompe de recirculation (19), un échangeur de chaleur (20.1) formant la sortie de la pompe à chaleur (20) ainsi qu'un dispositif de chauffage (21).
